# EUROPÄISCHE PATENTSCHRIFT

(11) **EP 1 025 289 B1**
(45) Veröffentlichungstag und Bekanntmachung des Hinweises auf die Patenterteilung: **23.04.2003**
(21) Anmeldenummer: 99944486.2
(22) Anmeldetag: 23.08.1999
(51) Int. Cl.: D01D 1/06, B29B 7/18

(54) **VORRICHTUNG ZUM MISCHEN UND FÖRDERN EINER POLYMERSCHMELZE**
DEVICE FOR MIXING AND TRANSPORTING A POLYMER MELT
DISPOSITIF DE MELANGE ET DE TRANSPORT D'UNE MASSE POLYMERE EN FUSION

(30) Priorität: 29.08.1998 DE 19839489
(43) Veröffentlichungstag der Anmeldung: 09.08.2000
(73) Patentinhaber: B a r m a g AG, D-42897 Remscheid (DE)
(72) Erfinder: GATHMANN, Egon, D-42897 Remscheid (DE); STAUSBERG, Georg, D-42897 Remscheid (DE); SCHÄFER, Klaus, D-42897 Remscheid (DE); DICKMEISS, Friedel, D-52249 Eschweiler (DE)
(74) Vertreter: Kahlhöfer, Hermann, Dipl.-Phys.
(86) Internationale Anmeldenummer: EP9906183
(87) Internationale Veröffentlichungsnummer: WO00012788

(56) Entgegenhaltungen:
- DE-A- 2 040 918
- US-A- 4 007 016
- US-A- 4 564 063
- US-A- 5 310 320

## Beschreibung

Die Erfindung betrifft eine Vorrichtung zum Mischen und Fördern einer Polymerschmelze gemäß dem Oberbegriff des Anspruchs 1 sowie eine Vorrichtung zum Mischen einer Polymerschmelze gemäß dem Oberbegriff des Anspruchs 2.

Bei der Verarbeitung von einem thermoplastischen Material wird das Material zuvor beispielsweise durch einen Extruder aufgeschmolzen und als Polymerschmelze einer Weiterverarbeitung zugeführt. Hierzu wird die Polymerschmelze mit einem Fördermittel gefördert. Für die Weiterverarbeitung der Polymerschmelze ist neben der Verweilzeit der Schmelze die Homogenität der Schmelze ein wichtiges Kriterium. Um eine hinreichend homogenisierte Schmelze zu erhalten, wird daher die Schmelze mittels eines Mischers vermengt. Insbesondere bei hohen Qualitätsanforderungen beim Einmischen von Additiven oder Füllstoffen müssen der Schmelzedurchsatz und die Intensität der Durchmischung aufeinander abgestimmt sein.

Aus der EP 0 636 190 ist beispielsweise eine Vorrichtung bekannt, bei welcher der Mischer mit einem Fördermittel zu einem Aggregat kombiniert ist. Hierbei wird die Mischwelle des Mischers gemeinsam mit dem Fördermittel angetrieben. Dabei wird die Drehzahl der Mischwelle durch die Förderleistung des Fördermittels bestimmt, so daß das Mischergebnis mittelbar vom Fördermittel abhängt. Bei der bekannten Vorrichtung wird ein Hauptstrom der Polymerschmelze in einer Mischkammer mittels der rotierenden Mischwelle vermischt und anschließend mittels des Fördermittels in Teilströme aufgeteilt und zu einer Spinndüse gefördert. Hierbei ist es besonders wichtig, daß die Teilströme gleichmäßig homogenisiert sind, um bei der anschließenden Weiterverarbeitung, in diesem Fall einer Spinnerei, eine gleichmäßige Produktqualität zu erhalten.

Aus der US 4,128,342 ist eine Vorrichtung bekannt, bei welcher die Mischerwelle des Mischers am Ende einer Extruderschnecke angeordnet ist und durch die Extruderschnecke angetrieben wird. Hierbei wird die Drehzahl der Mischerwelle durch die Drehzahl des Fördermittels, in diesem Fall einer Extruderschnecke, bestimmt.

Bei den bekannten Vorrichtungen ist somit das Mischergebnis von der Drehzahl der Mischerwelle und von der Länge der Mischerkammer abhängig. Um eine intensive Mischung bei relativ kleinen Drehzahlen zu erhalten, muß bei großen Durchsatzmengen die Mischerkammer und somit die Mischerwelle sehr lang ausgeführt werden.

Die DE 20 40 919 offenbart eine hohlzylindrische Mischwelle und eine in der Verlängerung angeordnete Extruderschnecke, die beide in einem zylindrischen Schneckengehäuse angeordnet sind und eine Innen- und eine Außenkammer bilden. In der Innenkammer erfolgt eine statische Durchmischung.

Es ist Aufgabe der Erfindung, eine Vorrichtung der eingangs genannten Art derart auszubilden, daß trotz niedriger Drehzahlen der Mischerwelle eine intensive Durchmischung der Polymerschmelze bei möglichst kompakter Bauweise des Mischers gewährt ist.

Diese Aufgabe wird mit einer Vorrichtung mit den Merkmalen des Anspruchs 1 und mit einer Vorrichtung mit den Merkmalen des Anspruchs 2 gelöst.
Die Erfindung zeichnet sich dadurch aus, daß innerhalb der Mischkammer eine innere Mischkammer (Innenkammer) und eine äußere Mischkammer (Außenkammer) gebildet sind, die von der Schmelze jeweils mit entgegengesetzten Strömungsrichtungen durchströmt und jeweils mit einer Mischwelle durchmischt werden. Damit wird bereits eine annähernd verdoppelte Verweilzeit der Polymerschmelze innerhalb der Mischkammer erreicht. Zudem führt die Strömungsumkehr des Schmelzestroms dazu, daß sich keine Randzonen mit weniger intensiver Durchmischung ausbilden. Die Polymerschmelze in der äußeren Randzone der Innenkammer wird nach der Strömungsumkehr zu einer inneren Randzone der Außenkammer. Dadurch erfolgt eine sehr intensive Durchmischung der Randzonen. Die Polymerschmelze wird somit gleichmäßig homogenisiert. Hierzu wird die Polymerschmelze durch den Schmelzeeinlaß in die Innenkammer des Mi-schers geführt. In der Innenkammer erfolgt durch Drehung der inneren Mischwelle (Innenwelle) ein Durchmischen der Polymerschmelze. Auf dem zum Schmelzeeinlaß gegenüberliegenden Ende der Innenkammer ist am Ende der äußeren Mischwelle (Außenwelle), die die Begrenzung zwischen der Innenkammer und der Außenkammer darstellt, ein Durchlaß gebildet. Die Polymerschmelze strömt aus der Innenkammer durch den Durchlaß in die Außenkammer. In der Außenkammer erfolgt eine weitere Durchmischung der Polymerschmelze aufgrund der Rotation der Außenwelle. Die Polymerschmelze verläßt die Außenkammer durch den Schmelzeauslaß, der vorzugsweise an dem zum Durchlaß gegenüberliegenden Ende der Mischkammer in die Mischkammer mündet.

Es ist jedoch auch möglich, den Schmelzeeinlaß und den Schmelzeauslaß zu vertauschen, so daß die in die Mischkammer eintretende Schmelze zunächst in der Außenkammer und anschließend in der Innenkammer durchmischt wird.

Insbesondere ergibt sich damit der Vorteil gegenüber dem bekannten Stand der Technik, daß selbst bei hohen Durchsatzmengen und relativ niedrigen Drehzahlen eine intensive Durchmischung der Schmelze erreicht wird. Durch die Strömungsumkehr der Polymerschmelze innerhalb der Mischkammer werden insbesondere radiale Temperaturunterschiede vermieden.

Bei dem erfindungsgemäßen Mischer besteht die Möglichkeit, die Innenwelle feststehend in der Mischkammer anzuordnen. Dabei wird durch die rotierende Außenwelle, die vorzugsweise mit Mischelementen besetzt ist, eine ausreichende Durchmischung erzielt.

Unabhängig von der Ausführung der Mischelemente, die beispielsweise als Stifte, Schneckengänge oder Schaufeln ausgeführt sein können, lassen sich die Innenwelle und die Außenwelle mit gleichem Drehsinn oder mit entgegengesetztem Drehsinn antreiben. Beim Einsatz von Mischelementen mit Förderwirkung empfiehlt sich ein Gleichlauf der Mischerwellen.

Die Mischerwellen lassen sich entsprechend der Weiterbildung der Erfindung gemäß Anspruch 4 vorteilhaft durch einen Antrieb gemeinsam mit dem Fördermittel antreiben.

Die innerhalb der hohlzylindrischen Außenwelle gebildete Innenkammer ist gemäß einer vorteilhaften Weiterbildung der Erfindung gemäß Anspruch 6 besonders geeignet, um die Polymerschmelze über den gesamten Querschnitt der Mischkammer gleichmäßig zu durchmischen. Der besondere Vorteil liegt darin, daß die innere Mischkammer eine rotierende Kammerwand aufweist. Somit kann die Drehung der Innenwelle und die Drehung der Außenwelle, die jeweils mit in die Mischkammer hineinragenden Mischelementen versehen sind, zur Durchmischung der Schmelze genutzt werden.

Hierbei ist die Weiterbildung gemäß Anspruch 6 besonders vorteilhaft, um eine intensive Durchmischung zu erhalten.

Bei einer besonders bevorzugten Ausführungsform der Erfindung gemäß Anspruch 8 ist ein Rohr derart über die Innenwelle gestülpt, daß sich zwischen der Innenwelle und dem Rohr die Innenkammer ausbildet und daß zwischen der Außenwelle und dem Rohr eine mittlere Kammer (Mittelkammer) gebildet wird. An einem Ende des Rohres weist das Rohr einen Durchlaß auf, um die Innenkammer mit der Mittelkammer zu verbinden. Der Durchlaß wird hierbei vorzugsweise an dem vom Schmelzeeinlaß gegenüberliegenden Ende der Innenkammer angeordnet. Diese Weiterbildung der Erfindung ermöglicht, daß der Schmelzestrom vom Schmelzeeinlaß bis zum Schmelzeauslaß innerhalb der Mischkammer mehrmals in seiner Strömungsrichtung umgekehrt wird. Die ineinander geschachtelten Teilkammern der Mischkammer werden nacheinander von der Polymerschmelze durchströmt. Hierbei ist die Strömungsrichtung der Polymerschmelze in den benachbarten Teilkammern entgegengesetzt gerichtet. Die Schmelze wird beispielsweise an dem eingespannten Ende des Rohres in die Innenkammer eingelassen und innerhalb der Innenkammer durch die Innenwelle vermischt. Die Schmelze durchströmt die Innenkammer und gelangt über den beispielsweise zwischen dem freien Ende des Rohres und dem Gehäuse gebildeten spaltförmigen Durchlaß zu der Mittelkammer. Beim Durchströmen der Mittelkammer in entgegengesetzter Richtung wird die Schmelze durch die Außenwelle vermengt. Anschließend tritt die Schmelze aus der Mittelkammer über den am Ende der Außenwelle gebildeten Durchlaß aus der Mittelkammer in die Außenkammer, wo eine weitere Vermischung erfolgt. Nach Durchlauf der Außenkammer verläßt die Schmelze den Mischer über den Schmelzeauslaß.

Um bei ortsfester Außenwand der Innenkammer eine gleichmäßige Durchmischung zu erhalten, ist die Weiterbildung der erfindungsgemäßen Vorrichtung gemäß Anspruch 8 von Vorteil.

Die Mischkammer läßt sich gemäß einer besonders bevorzugten Ausbildung der Erfindung gemäß Anspruch 9 vorteilhaft erweitern. Damit kann die Mischstrecke der Innenkammer vorteilhaft verlängert werden.

Um in der Mittelkammer die Polymerschmelze zu durchmischen, läßt sich die erfindungsgemäße Vorrichtung gemäß Anspruch 10 vorteilhaft ausführen.
Um eine besonders kompakte Bauweise des Mischers zu erreichen, ist die Weiterbildung gemäß Anspruch 11 bevorzugt anzuwenden. Hierbei wird die Mittelkammer im wesentlichen durch mehrere nutförmige Vertiefungen in der Rohroberfläche und mehrere Vertiefungen in der inneren Manteloberfläche der Außenwelle gebildet. Die Vertiefungen der Außenwelle und des Rohres sind relativ zueinander so angeordnet, daß - in Achsrichtung gesehen - die Vertiefungen der einen Oberfläche die Endbereiche jeweils zweier hintereinander angeordneter Vertiefungen der anderen Oberfläche teilweise axial überdecken, daß die den Mischer durchwandernde Schmelze in ständigem Wechsel von den Vertiefungen einer Oberfläche zu den Vertiefungen der anderen Oberfläche übergeben wird. Dabei führt die gegeneinander gerichtete Relativbewegung der beiden Oberflächen in Umfangsrichtung dazu, daß sich die Zusammensetzung der Füllungen der einzelnen Vertiefungen in Folge ihrer jeweils teilweisen Übergabe an zwei oder mehr Vertiefungen der anderen Oberfläche in ihrer Zusammensetzung ständig verfeinert. Damit wird ein sehr gutes Mischergebnis erzielt.

Bei einer besonders bevorzugten Weiterbildung der Erfindung gemäß Anspruch 12 ist die Außenkammer ebenfalls im wesentlichen durch mehrere nutförmige Ausnehmungen in der Mischkammerwand und mehrere Ausnehmungen in der äußeren Manteloberfläche der Außenwelle gebildet. Die Ausnehmungen sind derart zueinander angeordnet, daß die unter hohem Druck stehende Schmelze wechselweise das System der Ausnehmungen auf der Außenwelle und in der Mischkammer durchströmt, gemischt und immer wieder an die Ausnehmungen begrenzenden Scherstege geschert und verteilt wird. Dies führt im Ergebnis zu einer außerordentlichen gleichmäßigen Verteilung und Einmischung sämtlicher Bestandteile der Schmelze.

Um möglichst wenig Scherenergie in die Polymerschmelze einzubringen, wird vorgeschlagen, die Außenwelle am Umfang mit radial hervorstehenden Mischelementen auszuführen, die die Außenkammer im wesentlichen durchdringen. Damit können insbesondere kritisch zu verarbeitende Thermoplaste gemischt werden.

Wird als Fördermittel eine Extruderschnecke verwendet, ist die Weiterbildung der Erfindung gemäß Anspruch 14 besonders vorteilhaft. Hierbei kann die Innenwelle oder die Außenwelle direkt als Verlängerung der Extruderschnecke ausgebildet sein.

Bei einer besonders bevorzugten Ausbildung der Erfindung gemäß Anspruch 15 ist der Mischer mit einer Verteilerpumpe kombiniert. Diese Ausbildung ist insbesondere geeignet, um in Spinnanlagen einen Hauptschmelzestrom in mehrere Teilströme zu teilen. Durch die intensive Durchmischung können auch vorteilhaft dem Hauptstrom beigemengte Additive oder einem dem Hauptstrom zugeführten Nebenstrom unmittelbar vor der Stromteilung hinreichend eingemischt werden.

Um die Verteilerpumpe und die Mischerwellen möglichst gleichmäßig antreiben zu können, ist die Weiterbildung der Erfindung bis Anspruch 16 bevorzugt einzusetzen. Hierbei werden die Zahnradpaarungen der Mehrfachzahnradpumpe und die Mischerwellen gemeinsam durch eine Antriebswelle angetrieben.

Die erfindungsgemäße Vorrichtung zum Mischen einer Polymerschmelze zeichnet sich durch eine sehr intensive Durchmischung der Schmelze bei relativ geringer Drehzahl der Mischwellen aus. Durch die Strömungsumkehr innerhalb des Mischers werden zudem Totzonen oder Stauecken vermieden.

Im folgenden werden einige Ausführungsbeispiele unter Hinweis auf die beigefügten Zeichnungen näher beschrieben.

Es stellen dar:
- Fig. 1: eine Schnittdarstellung eines ersten Ausführungsbeispiels der erfindungsgemäßen Vorrichtung;
- Fig. 2: eine Schnittdarstellung eines weiteren Ausführungsbeispiels der erfindungsgemäßen Vorrichtung;
- Fig. 3: schematisch eine Draufsicht des Ausführungsbeispiels aus Fig. 2;
- Fig. 4 und 5: weitere Ausführungsbeispiele eines Mischers;
- Fig. 6: schematisch einen Querschnitt der Innenwelle des Ausführungsbeispiels aus Fig. 4;
- Fig. 7: Schnittdarstellung eines weiteren Ausführungsbeispieles der erfindungsgemäßen Vorrichtung.

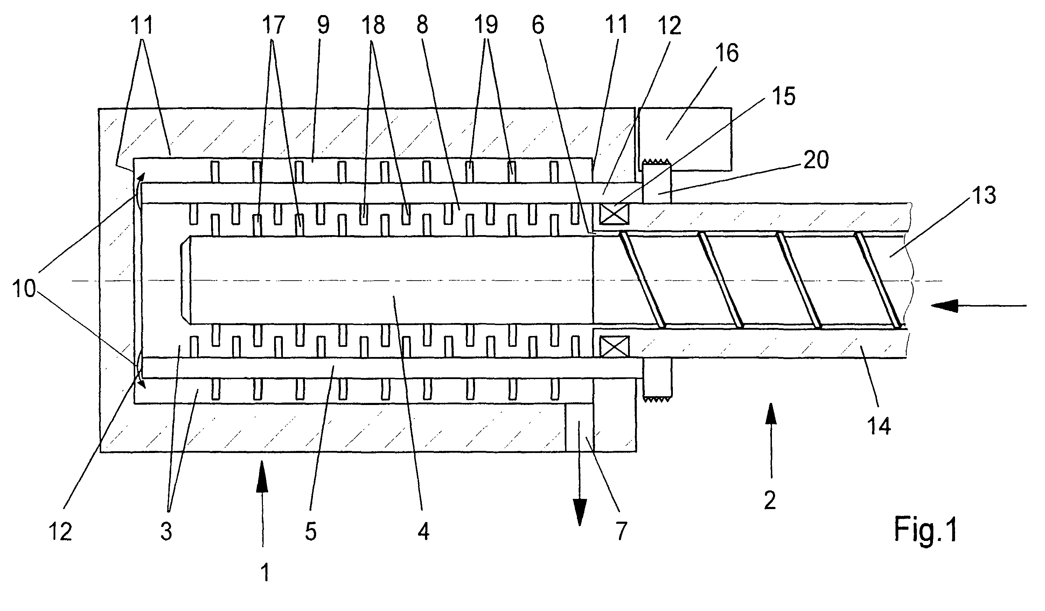

In Fig. 1 ist schematisch ein erstes Ausführungsbeispiel der erfindungsgemäßen Vorrichtung in einer Schnittdarstellung gezeigt. Die Vorrichtung besteht aus einem Mischer 1 und einem Fördermittel 2. Das Fördermittel 2 besteht aus einer Extruderschnecke 13, die innerhalb eines Zylinders 14 rotiert. Die Extruderschnecke 13 ist in Fig. 1 mit ihrem Austragsabschnitt am Ende des Zylinders 14 gezeigt. die Extruderschnecke 13 weist in diesem Abschnitt einen kontinuierlich verlaufenden Schneckengang auf, um eine Schmelze aus dem Zylinder zu fördern und einen konstanten Druck aufzubauen. Am Ende des Zylinders schließt sich eine Mischkammer 3 an. Hierbei mündet der Zylinder 14 mit einem Ende in der Mischkammer 3 und bildet somit einen Schmelzeeinlaß 6. An dem freien Ende der Extruderschnecke 13 ist in axialer Verlängerung eine Innenwelle 4 angebracht. Die Innenwelle 4 wird mittels der Extruderschnecke 13 und deren Antrieb angetrieben.

Die Innenwelle 4 besitzt am Umfang mehrere radial hervorragende Mischelemente 17. Die Mischelemente 17 sind hierbei gleichmäßig am Umfang der Innenwelle 4 verteilt. Die Mischelemente 17 können hierbei beispielsweise durch Stifte, Nocken oder Schaufeln gebildet sein.

Innerhalb der Mischkammer 3 ist im wesentlichen konzentrisch zu der Innenwelle 4 eine hohlzylindrische Außenwelle 5 angeordnet. Die Außenwelle 5 ist mit einem Ende 22 in der Mischkammerwand 11 bzw. dem Mantel des Zylinders 14 drehbar gelagert. Hierzu ist das Lager 15 vorgesehen. An dem Wellenende 22 ist ein Zahnkranz 20 befestigt, welcher zum Antreiben der Außenwelle 5 in einen Antrieb 16 eingreift. Die Außenwelle 5 ragt derart in die Mischkammer 3 hinein, daß zwischen dem Wellenende 12 und der Mischkammerwand 11 ein ringförmiger Durchlaß 10 gebildet wird. Hierdurch wird die Mischkammer 3 in eine zwischen der Innenwelle 4 und der Außenwelle 5 ausgebildeten Innenkammer 8 und in eine zwischen der Außenwelle 5 und der Mischkammerwand 11 sich erstrekkenden Außenkammer 9 geteilt. Die Innenkammer 8 und die Außenkammer 9 sind über den Durchlaß 10 miteinander verbunden. Die Außenwelle 5 weist außen am Mantel mehrere radial hervorragende Mischelemente 19 auf Im Innern sind ebenfalls mehrere Mischelemente 18 angeordnet. Die Mischelemente 18 der Außenwelle 5 und die Mischelemente 17 der Innenwelle 4 ragen versetzt zueinander in die Innenkammer 8 und überlappen sich. Die Mischelemente 18 und 19 der Außenwelle können beispielsweise als Stifte, Nocken oder Schaufeln ausgebildet sein.

Auf der zum Durchlaß gegenüberliegenden Seite der Mischkammer 3 ist ein Schmelzeauslaß 7 in der Mischkammerwand 11 eingebracht.

Bei der in Fig. 1 gezeigten Vorrichtung wird eine Polymerschmelze durch die Extruderschnecke 13 aus dem Zylinder 14 über den Schmelzeeinlaß 6 in die Innenkammer 8 des Mischers 1 gefördert. Die Innenwelle 4 rotiert gleichsinnig mit gleicher Drehzahl wie die Extruderschnecke 13. Die Außenwelle 5 wird durch den Antrieb 16 angetrieben. Hierbei kann die Außenwelle 5 in gleichem Drehsinn wie die Innenwelle 4 oder mit entgegengesetztem Drehsinn zu der Innenwelle 4 angetrieben werden. In beiden Fällen wird die Polymerschmelze in der Innenkammer 8 durch die Mischelemente 17 der Innenwelle 4 und durch die Mischelemente 18 der Außenwelle 5 durchmischt. Durch den Förderdruck fließt die Polymerschmelze in axiale Richtung bis zum Ende der Innenkammer 8. Am Ende der Innenkammer 8 gelangt die Polymerschmelze über den Durchlaß 10 in die benachbarte Außenkammer 9. Die Außenkammer 9 wird nun entgegengesetzt in axiale Richtung von der Polymerschmelze durchströmt. Dabei erfolgt eine weitere Vermischung der Polymerschmelze durch die Mischelemente 19 am Umfang der Außenwelle 5. Am Ende der Außenkammer 9 wird die Polymerschmelze über den Schmelzeauslaß 7 abgeführt.

Bei der in Fig. 1 dargestellten Vorrichtung ist das Fördermittel dem Mischer vorgeschaltet. Diese Anordnung ist somit besonders geeignet, um eine Mischung der Polymerschmelze unmittelbar nach Aufschmelzung durch einen Extruder durchzuführen.

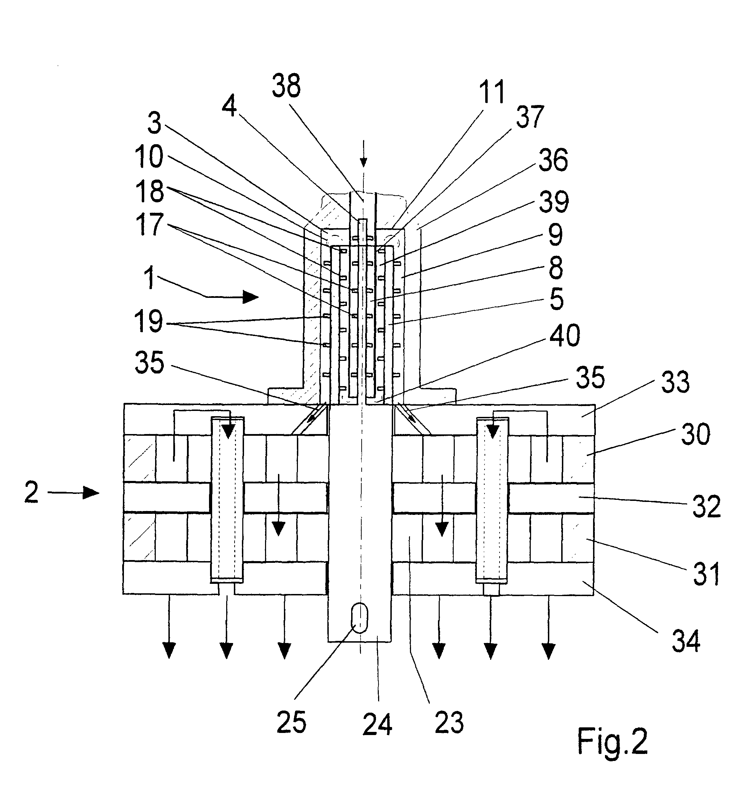

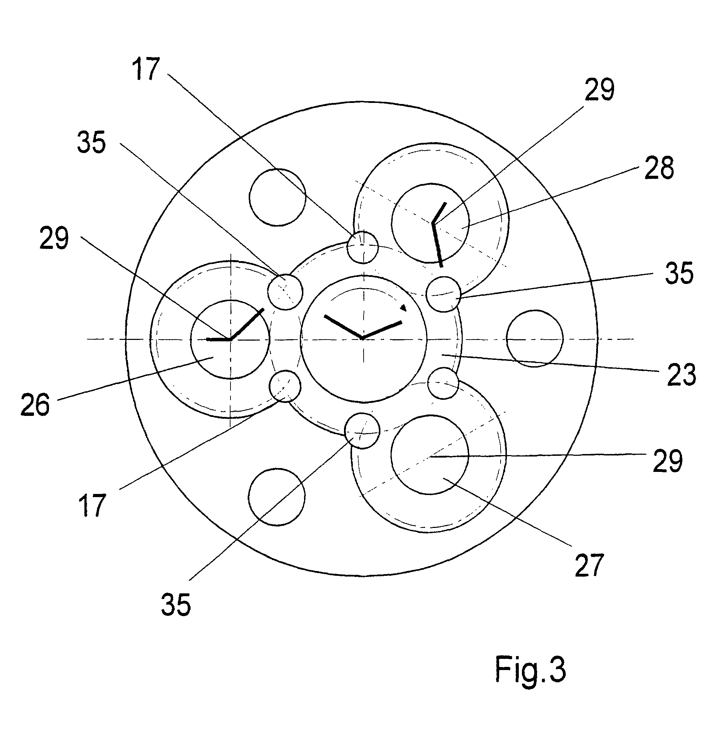

In Fig. 2 und 3 ist ein weiteres Ausführungsbeispiel einer erfindungsgemäßen Vorrichtung gezeigt, bei welcher das Fördermittel 2 dem Mischer 1 nachgeschaltet ist. Fig. 2 zeigt hierbei schematisch eine Schnittdarstellung der Vorrichtung und Fig. 3 schematisch eine Draufsicht der Vorrichtung. Die nachfolgende Beschreibung gilt somit für Fig. 2 und 3.

Das Fördermittel 2 ist in diesem Fall als Verteilerpumpe ausgeführt. Die dargestellte Verteilerpumpe ist eine Zahnradpumpe mit einem Sonnenrad 23. Das Sonnenrad 23 wird durch eine gemeinsame Antriebswelle 24 angetrieben. Die Antriebsseite ist durch eine Keilnut 25 kenntlich Das Sonnenrad 23 kämmt mit drei Planetenrädern 26, 27 und 28. Die Planetenräder sind auf dem Umfang jeweils mit 120° versetzt. Die Planetenräder sind frei drehbar auf den Zapfen 29 gelagert. Es ergeben sich hierdurch drei Zahnradpaarungen mit jeweils dem Sonnenrad 23 und einem der Planetenräder 26, 27 und 28. Jede dieser Zahnradpaarungen bildet eine Teilpumpe.

Bei dem in Fig. 2 gezeigten Fördermittel handelt es sich somit um eine Sechsfach-Pumpe. Durch die gemeinsame Antriebswelle 24 wird nämlich noch ein zweiter Satz von Zahnrädern, ebenfalls bestehend aus Sonnenrad 23 sowie den Planetenrädern 26, 27 und 28, angetrieben. Der Klarheit wegen sei bemerkt, daß entsprechende Räder der beiden Zahnradsätze gleichachsig gelagert sind. Die beiden Radsätze werden durch die Gehäuseplatten 30 und 31 geführt. Diese Gehäuseplatten 30 und 31 weisen Ausschneidungen auf, in denen jeweils das Sonnenrad und die Planetenräder liegen. Die beiden Radsätze sind durch die Zwischenplatte 32 voneinander getrennt. Die Pumpensätze werden an ihren jeweils anderen Stirnseiten durch die Deckelplatten 33 und 34 verschlossen.

Der Antriebsseite der Pumpe gegenüberliegend sind die Einlaßkanäle 35 in der Deckelplatte eingebracht. Die Einlaßkanäle 35 stehen mit der Außenkammer 9 des Mischers 1 in Verbindung. Hierzu ist der Mischer mit seinem Gehäuse 36 an die Deckelplatte 33 angeflanscht. In dem Gehäuse 36 ist die Mischkammer 3 fluchtend zu der Antriebswelle 24 angeordnet. An dem von der Antriebsseite angewandten Ende der Antriebswelle 24 sind eine Innenwelle 4 und eine Außenwelle 5 angebracht. Somit ragt die Antriebswelle mit der Innenwelle 4 und der Außenwelle 5 in die Mischkammer 3 hinein. Auf der gegenüberliegenden Seite zu den Enden der Mischerwellen 4 und 5 ist in der Mischerkammerwand 11 ein Rohr 37 zentrisch eingebracht. Das Rohr 37 ragt mit einem freien Ende in die Mischkammer 3 hinein, wobei das Rohr 37 die Innenwelle 4 umschließt. Durch das Rohr 37 wird eine Innenkammer 8 gebildet. Am freien Ende des Rohres 37 ist innerhalb der Mischkammer 3 ein Durchlaß 40 eingebracht, durch welchen die Innenkammer 8 mit einer zwischen dem Rohr 37 und der Außenwelle 5 liegenden Mittelkammer 39 verbunden ist. Die Mittelkammer 39 ist wiederum über einen am freien Ende der Außenwelle 5 ausgebildeten Durchlaß 10 mit der Außenkammer 9 verbunden. Die Außenkammer 9 ist ihrerseits am Flanschende des Gehäuses 36 mit den Einlaßkanälen 35 der Verteilerpumpe verbunden.

Bei der in Fig. 2 gezeigten Ausführung der erfindungsgemäßen Vorrichtung wird ein Schmelzestrom über einen zentralen Einlaßkanal 38 in die Innenkammer 8 des Mischers 1 eingeleitet. Am Umfang der Innenwelle 4 sind mehrere Mischelemente 17 radial aufragend angeordnet, so daß die Polymerschmelze innerhalb der Innenkammer 8 bei Drehung der Innenwelle durchmischt wird. Die Innenwelle 4 und die Außenwelle 5 werden hierbei durch die gemeinsame Antriebswelle 24 angetrieben. Nachdem die Schmelze die Innenkammer 8 axial durchströmt hat, wird die Schmelze am freien Ende des Rohres 37 über den Durchlaß 40 in die benachbarte Mittelkammer 39 geführt. Die Schmelze durchströmt die Mittelkammer 39 in axialer Richtung entgegengesetzt zu der Strömungsrichtung der Innenkammer 8. Die Mittelkammer 39 wird durch mehrere Mischelemente 18 durchdrungen, die am Innenmantel der Außenwelle 5 befestigt sind. Am freien Ende der Außenwelle 5 wird die Schmelze über den Durchlaß 10 in die benachbarte Außenkammer 9 geleitet. Die Außenkammer 9 wird mittels der am Umfang der Außenwelle 5 angebrachten Mischelemente 19 durchmischt bis die Polymerschmelze am Ende der Außenkammer 9 zu den Einlaßkanälen 35 der Verteilerpumpe gelangt. In der Verteilerpumpe wird der Schmelzestrom durch die Teilpumpen in insgesamt sechs Teilströme geteilt und jeweils zu einer Spinndüse gefördert.

Bei der in Fig. 2 gezeigten Anordnung ist die Innenwelle derart ausgeführt, daß ihr freies Ende zur Verlängerung der Mischkammer mit ihrem freien Ende in den zentrischen Einlaßkanal 38 hineinragt.

Bei diesem Ausführungsbeispiel wird eine intensive Durchmischung des Hauptstroms unmittelbar vor seiner Aufteilung in Teilströme bewirkt. Es werden hierbei sämtliche Querschnittsbereiche des Hauptstroms miteinander vermischt. Man erreicht hierdurch, daß sämtliche Teilströme nicht nur in sich sondern auch untereinander homogen sind und eine gleichmäßige Temperatur und Viskosität haben. Derartige Vorrichtungen werden vorzugsweise in Spinnanlagen eingesetzt, bei welchen ein thermoplastisches Material durch einen Extruder aufgeschmolzen und unter Druck zu der Verteilerpumpe gefördert wird.

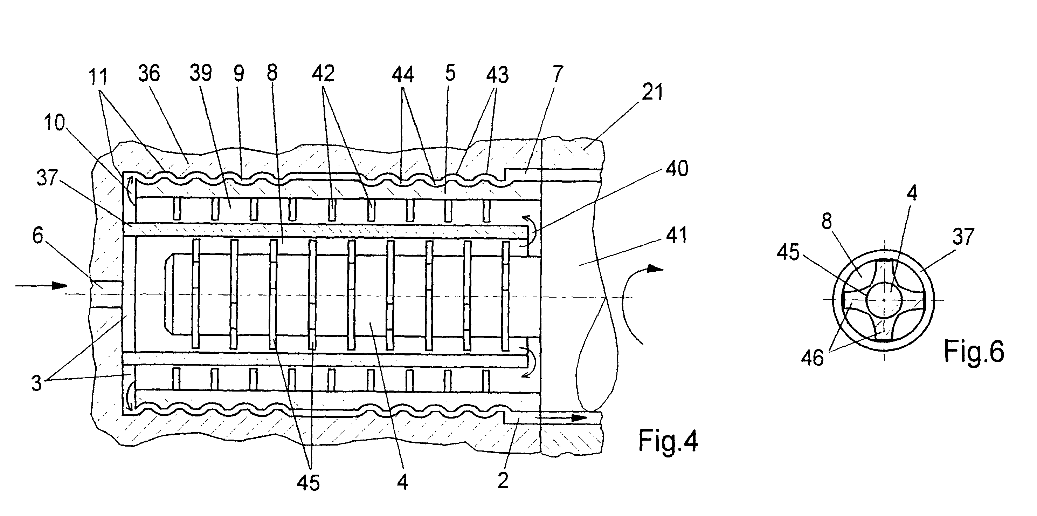

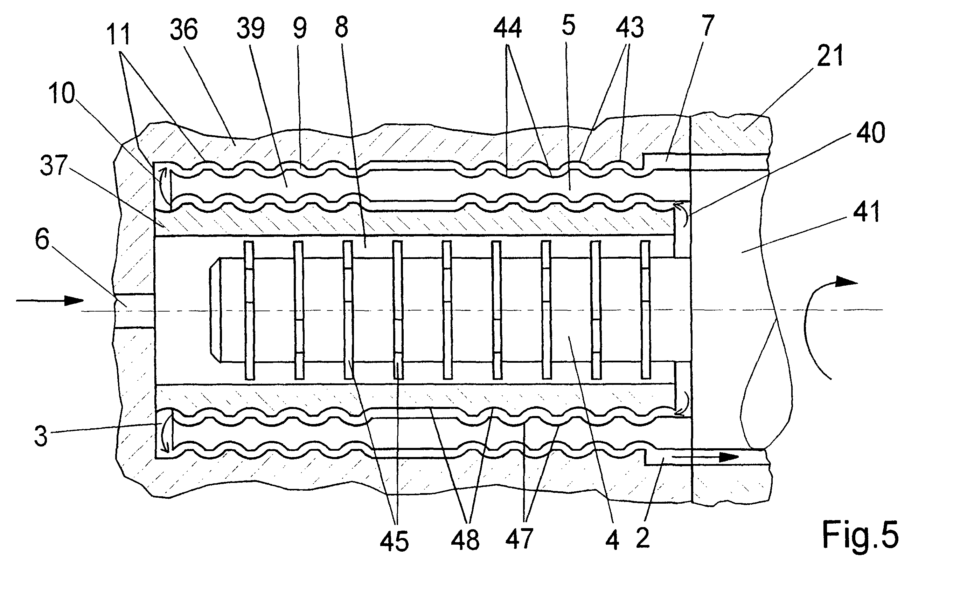

In Fig. 4 und 5 sind weitere Ausführungsbeispiele von Mischern gezeigt, wie sie beispielsweise in einer Vorrichtung nach Fig. 1 oder einer Vorrichtung nach Fig. 2 einsetzbar wären. Zur besseren Übersicht wurden auch hierbei die Bauteile mit gleicher Funktion mit identischen Bezugszeichen gekennzeichnet. Im nachfolgenden werden die Figuren 4 und 5 gemeinsam beschrieben, insoweit kein anderer Bezug genommen ist.

Die Mischkammer 3 ist in einem Gehäuse 36 eingebracht. Das Gehäuse 36 ist mit einem Lagerteil 21 verbunden, durch welches die Mischkammer 3 nach außen hin verschlossen ist. In dem Lagerteil 21 ist eine Antriebswelle 41 gelagert. Am freien Ende der Antriebswelle 41 sind zentrisch die Innenwelle 4 und konzentrisch zur Innenwelle 4 die Außenwelle 8 befestigt. Die Innenwelle 4 und die Außenwelle 8 ragen in die Mischkammer 3 hinein. An der zum Lagerteil gegenüberliegenden Stirnseite der Mischkammer 3 ist ein Rohr 37 an der Mischkammerwand 11 befestigt. Das Rohr 37 ragt in dem zwischen der Innenwelle 4 und der Außenwelle 8 gebildeten Ringraum. Am freien Ende des Rohres 37 ist in der Mischkammer 3 ein Durchlaß 40 gebildet. Über den Durchlaß 40 sind die zwischen dem Rohr 37 und der Innenwelle 4 gebildete Innenkammer 8 mit der zwischen der Außenwelle 9 und dem Rohr 37 gebildeten Mittelkammer 39 verbunden. Am freien Ende der Außenwelle 5 ist ein Durchlaß 10 vorgesehen, welcher die Mittelkammer 39 mit der Außenkammer 9 verbindet. Die Mischkammer 3 weist einen Schmelzeeinlaß 6 und einen Schmelzeauslaß 7 auf. Der Schmelzeeinlaß 6 mündet in der Innenkammer 8. Der Schmelzeauslaß 7 ist mit der Außenkammer 9 verbunden.

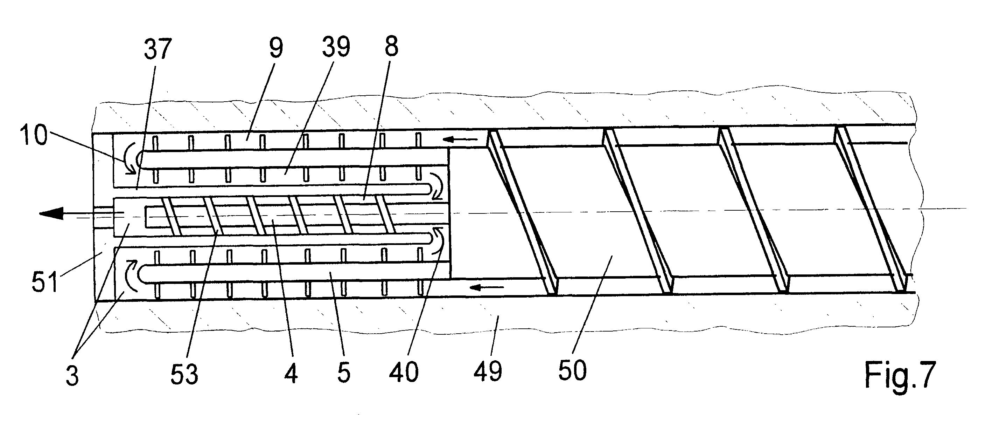

Am Umfang der Innenwelle 4 sind mehrere parallel hintereinander angeordnete Mischkränze 45 angeordnet, die radial hervorstehen und die Innenkammer 8 bis zum Innendurchmesser des Rohres 37 im wesentlichen durchdringen. In Fig. 6 ist ein Querschnitt der Innenkammer 8 gezeigt. Die Innenwelle 4 ist mit dem Mischkranz 45 spielfrei in dem Rohr 37 drehbar angeordnet. Der Mischkranz 45 besteht aus mehreren in einer Ebene am Umfang der Innenwelle angeordneten Mischelementen 46. Die Mischelemente 46 durchdringen die Innenkammer 8 in radiale Richtung, so daß bei Drehung der Innenwelle die im wesentlichen durch den Ringraum zwischen dem Rohr 37 und der Innenwelle 4 gebildeten Innenkammer 8 durchmischt wird. Die Zahnkränze 45 sind am Umfang der Innenwelle 4 derart angeordnet, daß die Mischelemente 46 benachbarter Mischkränze in axialer Richtung versetzt zueinander angeordnet sind.

Bei dem Ausführungsbeispiel des Mischers in Fig. 4 sind mehrere Stifte 42 an der inneren Manteloberfläche der Außenwelle 5 derart befestigt, daß die Mittelkammer 39 in radialer Richtung im wesentlichen durchdrungen wird. Die Stifte 42 sind ebenfalls in axialer Richtung versetzt zueinander angeordnet.

Die Außenkammer 9 wird bei den Ausführungsbeispielen gemäß Fig. 4 und 5 durch eine Vielzahl von Ausnehmungen 43 in der Mischkammerwand 11 und eine Vielzahl von Ausnehmungen 44 in der äußeren Manteloberfläche der Außenwelle 5 gebildet. Die Ausnehmungen 43 und 44 werden hierbei vorzugsweise als achsparallele Nuten ausgeführt. Diese sind in axial aneinandergereihte Bereiche mit begrenzter Längenausdehnung jeweils regelmäßig auf dem jeweiligen Umfang verteilt und in Achsrichtung derart angeordnet, daß die Ausnehmung 44 in der Oberfläche der Außenwelle 5 und die Ausnehmung 43 in der Mischkammerwand 11 sich in ihren Endbereichen jeweils teilweise überdecken. Zwischen dem Außendurchmesser der Außenwelle 5 und dem Innendurchmesser der Mischkammer 3 ist ein enger Spalt gebildet. Somit wird die Polymerschmelze innerhalb der Außenkammer 9 abwechselnd von einer Ausnehmung in die gegenüberliegende Ausnehmung und umgekehrt gezwungen.

Bei dem in Fig. 5 dargestellten Ausführungsbeispiel des Mischers ist die Mittelkammer 39 in gleicher Weise durch eine Vielzahl von Vertiefungen 47 in der inneren Manteloberfläche der Außenwelle 5 und damit zusammenwirkenden Vertiefungen 48 im Mantel des Rohres 37. Hierbei wird der Schmelzestrom innerhalb der Mittelkammer 39 abwechselnd von einer Vertiefung in die gegenüberliegende Vertiefung und umgekehrt geführt.

Bei dem in Fig. 4 und 5 gezeigten Ausführungsbeispielen wird die Polymerschmelze unter Druck über den Schmelzeeinlaß 6 in die Innenkammer 8 eingelassen. Bevor die Polymerschmelze über den Schmelzeauslaß 7 die Mischkammer verläßt, wird sie nacheinander in der Innenkammer 8, der Mittelkammer 39 und der Außenkammer 9 durchmischt. Hierbei werden die Mischerwellen 4 und 5 gleichsinnig durch die Antriebswelle 41 angetrieben. Grundsätzlich ist es bei den in Fig. 4 und 5 gezeigten Ausführungsbeispielen auch möglich, den Schmelzeeinlaß und den Schmelzeauslaß zu vertauschen, so daß der Schmelzestrom bei Eintritt in den Mischer in die Außenkammer 9 mündet.

In Fig. 7 ist weiteres Ausführungsbeispiel einer erfindungsgemäßen Vorrichtung gezeigt. Hierbei ist die Mischkammer 3 am Ende eines Zylinders 49 ausgebildet. In dem Zylinder 49 ist eine Extruderschnecke 50 drehbar gelagert. Am Ende der Extruderschnecke 50 sind die Innenwelle 4 und Außenwelle 5 mit der Extruderschnecke 50 verbunden. Die Außenwelle 5 und die Innenwelle 4 ragen in die Mischkammer 3 auskragend hinein. Gegenüber den freien Wellenenden ist ein Deckel 51 dichtend in den Zylinder 49 eingebracht. An der zur Mischkammer 3 gewandten Stirnseite des Deckels 51 ist ein Rohr 37 befestigt. Wie bereits zuvor beschrieben, sind die Außenwelle 5, das Rohr 37 und die Innenwelle 4 derart zueinander angeordnet, daß sich eine Außenkammer 9, eine Mittelkammer 39 und eine Innenkammer 8 bildet. Die Außenkammer ist über den Durchlaß 10 mit der Mittelkammer 39 verbunden. Die Mittelkammer 39 ist über den Durchlaß 40 mit der Innenkammer 8 verbunden. Bei diesem Ausführungsbeispiel weist die Außenwelle jeweils innenliegende und außenliegende Mischelemente 18 und 19 auf. Die Innenwelle 4 ist mit einem Schneckengang 53 bestückt.

Die durch die Extruderschnecke 50 geförderte Polymerschmelze gelangt aus der Förderkammer 52 des Zylinders 49 in die direkt in axialer Richtung angrenzende Außenkammer 9. Nachdem die Polymerschmelze zur Durchmischung nacheinander in axiale Richtung mit entgegengesetzten Strömungsrichtungen die Außenkammer 9, die Mittelkammer 39 und die Innenkammer 8 durchströmt hat, verläßt sie die Innenkammer 8 über den zentrisch im Deckel 51 eingebrachten Schmelzeauslaß 7.

Bei der in Fig. 7 gezeigten Vorrichtung besteht auch die Möglichkeit, daß am Umfang der Innenwelle 4 und am Innendurchmesser der Außenwelle 5 jeweils ein Schneckengang angeordnet ist. Hierdurch wird die Polymerschmelze durch die Mittelkammer und die Innenkammer gefördert. Eine derartige Ausführung besitzt den Vorteil, daß insbesondere bei einer Kombination mit einer Extruderschnecke keine höheren Druckverluste entstehen.

Grundsätzlich sind die alle in den Ausführungsbeispielen dargestellten Mischertypen in den Vorrichtungen gemäß Fig. 1, Fig. 2 oder Fig. 7 einsetzbar.

## Patentansprüche

1. Vorrichtung zum Mischen und Fördern einer Polymerschmelze mit einem Mischer (1), welcher eine Mischkammer (3) mit einem Schmelzeeinlaß (6) und einem Schmelzeauslaß (7) aufweist und welcher eine rotierende Mischwelle (4) innerhalb der Mischkammer (3) aufweist, und mit einem Fördermittel (2), welches mit der Mischwelle (4) derart verbunden ist, daß das Fördermittel (2) und die Mischwelle (4) gemeinsam durch einen Antrieb antreibbar sind, **dadurch gekennzeichnet, daß** eine hohlzylindrische Mischwelle (5) (Außenwelle) umhüllend zu der ersten Mischwelle (4) (Innenwelle) innerhalb der Mischkammer (3) rotierend antreibbar angeordnet ist, daß die Außenwelle (5) auskragend in die Mischkammer (3) hineinragt und dabei stirnseitig einen Durchlaß (10) zwischen dem freien Ende der Außenwelle (5) und der Mischkammerwand (11) bildet, daß der Schmelzeeinlaß (6) in eine zwischen der Innenwelle (4) und der Außenwelle (5) ausgebildeten inneren Mischkammer (8) (Innenkammer) mündet und der Schmelzeauslaß (7) in eine zwischen der Außenwelle (5) und der Mischkammerwand (11) ausgebildeten äußeren Mischkammer (9) (Außenkammer) mündet oder umgekehrt und daß die Innenkammer (8) und die Außenkammer (9) durch den Durchlaß (10) miteinander verbunden sind.

2. Vorrichtung zum Mischen einer Polymerschmelze mit einer Mischkammer (3), welche einen Schmelzeeinlaß (6) und einen Schmelzeauslaß (7) aufweist, und mit einer Mischwelle (4) innerhalb der Mischkammer (3), **dadurch gekennzeichnet, daß** eine rotierend angetriebene, hohlzylindrische Mischwelle (5) (Außenwelle) umhüllend zu der ersten Mischwelle (4) (Innenwelle) innerhalb der Mischkammer (3) rotierend antreibbar angeordnet ist, daß die Außenwelle (5) auskragend in die Mischkammer (3) hineinragt und dabei stirnseitig einen Durchlaß (10) zwischen dem freien Ende der Außenwelle (5) und der Mischkammerwand (11) bildet, daß der Schmelzeeinlaß (6) in eine zwischen der Innenwelle (4) und der Außenwelle (5) ausgebildeten inneren Mischkammer (8) (Innenkammer) mündet und der Schmelzeauslaß (7) in eine zwischen der Außenwelle (5) und der Mischkammerwand (11) ausgebildeten äußeren Mischkammer (9) (Außenkammer) mündet oder umgekehrt und daß die Innenkammer (8) und die Außenkammer (9) durch den Durchlaß (10) miteinander verbunden sind.

3. Vorrichtung nach Anspruch 1 oder 2, **dadurch gekennzeichnet, daß** die Innenwelle (4) und die Außenwelle (5) mit gleichem oder entgegengesetztem Drehsinn antreibbar sind.

4. Vorrichtung nach Anspruch 3, **dadurch gekennzeichnet, daß** die Innenwelle (4) und die Außenwelle (5) an einer gemeinsamen Antriebswelle angebracht sind.

5. Vorrichtung nach einem der vorgenannten Ansprüche, **dadurch gekennzeichnet, daß** die Außenwelle (5) innen am Mantel mehrere Mischelemente (18) und die Innenwelle (4) am Umfang mehrere Mischelemente (17) aufweist, welche in die Innenkammer (8) hineinragen.

6. Vorrichtung nach Anspruch 5, **dadurch gekennzeichnet, daß** die Mischelemente (17) der Innenwelle (4) und die Mischelemente (18) der Außenwelle (5) ineinander greifen, wobei der Schmelzeeinlaß (6) und der Schmelzeauslaß (7) im Bereich des gelagerten Endes der Außenwelle (5) in die Mischkammer (3) münden.

7. Vorrichtung nach Anspruch 1 oder 2, **dadurch gekennzeichnet, daß** ein die Innenwelle (4) umhüllendes Rohr (37) in der Mischkammer (3) angeordnet ist, daß das Rohr (37) mit einem freien Ende in die Außenwelle (5) hineinragt und dabei stirnseitig einen zweiten Durchlaß (40) zwischen dem freien Ende und der Mischkammerwand (11) bildet und daß das Rohr (37) mit dem gegenüberliegenden Ende an der dem Ende der Außenwelle (5) gegenüberliegenden Mischkammerwand (11) befestigt ist, wobei zwischen der Innenwelle (4) und dem Rohr (37) die Innenkammer (8) und zwischen der Außenwelle (5) und dem Rohr (37) eine mittlere Mischkammer (39) (Mittelkammer) gebildet ist, die über den zweiten Durchlaß (40) mit der Innenkammer (8) und über den ersten Durchlaß (10) mit der Außenkammer (9) verbunden ist.

8. Vorrichtung nach Anspruch 7, **dadurch gekennzeichnet, daß** die Innenwelle (4) am Umfang radial hervorstehende Mischelemente (17) aufweist, welche die Innenkammer (8) im wesentlichen durchdringen.

9. Vorrichtung nach Anspruch 7 oder 8, **dadurch gekennzeichnet, daß** die Mischkammer (3) durch das befestigte Ende des Rohres (37) zapfenförmig erweitert ist, welches von der Innenwelle (4) im wesentlichen über die gesamte Länge durchdrungen wird.

10. Vorrichtung nach einem der Ansprüche 7 bis 9, **dadurch gekennzeichnet, daß** die Außenwelle (5) radial nach innen ragende Mischelemente (18) aufweist, die die Mittelkammer im wesentlichen durchdringen.

11. Vorrichtung nach einem der Ansprüche 7 bis 9, **dadurch gekennzeichnet, daß** die Mittelkammer (39) im wesentlichen durch mehrere nutenförmige Vertiefungen (48) in der Rohroberfläche und mehrere Vertiefungen (47) in der inneren Manteloberfläche der Außenwelle (5) gebildet ist und daß die Vertiefungen (48) des Rohres (37) und die Vertiefungen (47) der Außenwelle (5) derart zueinander angeordnet sind, daß ein Schmelzestrom bei Rotation der Außenwelle (5) wechselweise aus einer Vertiefung des Rohres (37) in eine Vertiefung der Außenwelle (5) und umgekehrt gezwungen wird.

12. Vorrichtung nach einem der vorgenannten Ansprüche, **dadurch gekennzeichnet, daß** die Außenkammer (9) im wesentlichen durch mehrere nutenförmige Ausnehmungen (43) in der Mischkammerwand (11) und mehrere Ausnehmungen (44) in der äußeren Manteloberfläche der Außenwelle (5) gebildet ist und daß die Ausnehmungen (43) der Mischkammerwand (11) und die Ausnehmungen (44) der Außenwelle (5) derart zueinander angeordnet sind, daß ein Schmelzestrom bei Rotation der Außenwelle (5) wechselweise aus einer Ausnehmung der Mischkammerwand (11) in eine Ausnehmung der Außenwelle (5) und umgekehrt gezwungen wird.

13. Vorrichtung nach einem der Ansprüche 1 bis 11, **dadurch gekennzeichnet, daß** die Außenwelle (5) am Umfang radial hervorstehende Mischelemente (19) aufweist, die die Außenkammer im wesentlichen durchdringen.

14. Vorrichtung nach Anspruch 1, **dadurch gekennzeichnet, daß** das Fördermittel (2) eine Extruderschnecke (13, 50) ist, die dem Mischer (1) vorgeschaltet ist.

15. Vorrichtung nach Anspruch 1, **dadurch gekennzeichnet, daß** das Fördermittel (2) eine Verteilerpumpe ist, die dem Mischer (1) nachgeschaltet ist.

16. Vorrichtung nach Anspruch 15, **dadurch gekennzeichnet, daß** die Verteilerpumpe als eine Mehrfach-Zahnradpumpe mit mehreren Zahnradpaarungen ausgebildet ist und daß die Zahnradpaarungen (23, 26, 27, 28) und die Mischerwellen (4, 5) gemeinsam durch eine Antriebswelle (24) antreibbar sind.

## Claims

1. Apparatus for mixing and advancing a polymer with a mixer (1), which comprises a mixing chamber (3) and a melt inlet (6) and a melt outlet (7), and which has a rotating mixing shaft (4) inside the mixing chamber (3), and with a conveying device (2), which connects to the mixing shaft (4) such that the conveying device (2) and the mixing shaft (4) can be driven together by a drive, **characterized in that** a hollow cylindrical mixing shaft (5) (outer shaft) is arranged rotably drivable inside the mixing chamber (3) in surrounding relationship with the first mixing shaft (4) (inner shaft), that the outer shaft (5) extend in cantilever fashion into the mixing chamber (3) and thus forms at the front end a passageway (10) between the free end of outer shaft (5) and a mixing chamber wall (11), that the melt inlet (6) terminates in an inner mixing chamber (8) (inner chamber) formed between the inner shaft (4) and the outer shaft (5), and the melt outlet (7) terminates in an outer mixing chamber (9) (outer chamber) formed between the outer shaft (5) and the mixing chamber wall (11), or vice versa, and that the inner chamber (8) and the outer chamber (9) are interconnected by the passageway (10).

2. Apparatus for mixing a polymer melt with a mixing chamber (3), which comprises a melt inlet (6) and a melt outlet (7), and with a mixing shaft (4) inside the mixing chamber (3), **characterized in that** a rotationally driven, hollow cylindrical mixing shaft (outer shaft) (5) is arranged rotably drivable inside the mixing chamber (3) in surrounding relationship with the first mixing shaft (inner shaft) (4), that the outer shaft (5) extends in cantilever fashion into the mixing chamber (3), and thus forms at its front end a passageway (10) between the free end of the outer shaft (5) and the mixing chamber wall (11), that the melt inlet (6) terminates in an inner mixing chamber (inner chamber) (8) formed between the inner shaft (4) and the outer shaft (5), and the melt outlet (7) terminates in an outer mixing chamber (outer chamber ) (9) formed between the outer shaft (5) and the mixing chamber wall (11), or vice versa, and that the inner chamber (8) and the outer chamber (9) are interconnected by the passageway (10).

3. Apparatus of claim 1 or 2, **characterized in that** the inner shaft (4) and the outer shaft (5) can be driven in the same direction or in opposite directions.

4. Apparatus of claim 3, **characterized in that** the inner shaft (4) and the outer shaft (5) are mounted on a common drive shaft.

5. Apparatus of one of the foregoing claims, **characterized in that** the outer shaft (5) mounts inside on its jackets a plurality of mixing elements (18) and the inner shaft (4) mounts on its circumference a plurality of mixing elements (17), which extend into the inner chamber (8).

6. Apparatus of claim 5, **characterized in that** the mixing elements (17) of the inner shaft (4) and the mixing elements (18) of the outer shaft (5) engage each other, with the melt inlet (6) and the melt outlet (7) terminating in the mixing chamber (3) in the region of the supported end of outer shaft (5).

7. Apparatus of claim 1 or 2, **characterized in that** a tube (37) surrounding the inner shaft (4) is arranged in the mixing chamber (3), that the tube (37) extends with a free end into the outer shaft (5) and forms at its front end a second passageway (40) between its free end and the mixing chamber wall (11), and that the tube (37) is mounted with its opposite end to the mixing chamber wall (11) opposite to the end of outer shaft (5), there being formed between the inner shaft (4) and the tube (37) the inner chamber (8), and between the outer shaft (5) and the tube (37) an intermediate mixing chamber (39) (intermediate chamber), which is connected via the second passageway (40) to the inner chamber (8) and via the first passageway (10) to the outer chamber (9).

8. Apparatus of claim 7, **characterized in that** the inner shaft (4) comprises on its circumference radially projecting mixing elements (17), which substantially extend through the inner chamber (8).

9. Apparatus of claim 7 or 8, **characterized in that** the mixing chamber (3) is extended in the shape of a pin by the mounted end of tube (37), through which the inner shaft (4) extends substantially over the entire length.

10. Apparatus of one of claims 7 to 9, **characterized in that** the outer shaft (5) comprises radially inward projecting mixing elements (18), which extend substantially through the intermediate chamber.

11. Apparatus of one of claims 7 to 10, **characterized in that** the intermediate chamber (39) is formed substantially by a plurality of groove-shaped recesses (48) in the tube surface and a plurality of recesses (47) in the inner jacket surface of the outer shaft (5), and that said recesses (48) of the tube (37) and said recesses (47) of the outer shaft (5) are arranged relative to one another such that during the rotation of the outer shaft (5) a melt flow is alternately forced from a recess of tube (37) into a recess of outer shaft (5), and vice versa.

12. Apparatus of one of the foregoing claims, **characterized in that** the outer chamber (9) is formed substantially by a plurality of groove-shaped recesses (43) in the mixing chamber wall (11) and a plurality of recesses (44) in the outer jacket surface of outer shaft (5), and that the recesses (43) of the mixing chamber wall (11) and the recesses (44) of the outer shaft (5) are arranged relative to one another such that during the rotation of outer shaft (5) a melt flow is alternately forced from a recess of the mixing chamber wall (11) into a recess of the outer shaft (5), and vice versa.

13. Apparatus of one of claims 1 to 11, **characterized in that** the outer shaft (5) comprises on its circumference radially projecting mixing elements (19) which substantially extend through the outer chamber.

14. Apparatus of claim 1, **characterized in that** the conveying device (2) is an extrusion screw (13, 50), which precedes the mixer (1).

15. Apparatus of claim 1, **characterized in that** the conveying medium is as distributor pump that follows the mixer (1).

16. Apparatus of claim 15, **characterized in that** the distributor pump is constructed as a multiple gear pump with a plurality of paired gears, and that the paired gears (23, 26, 27, 28) and the mixer shafts (4, 5) can be driven jointly by a drive shaft (24):

## Revendications

1. Dispositif pour mélanger et avancer un polymère en fusion avec une mélangeuse (1), qui a une chambre de mélange (3) avec une admission de matière en fusion (6) et une sortie de matière en fusion (7) et qui a un arbre de mélange (4) en rotation à l'intérieur de la chambre de mélange (3), et avec un moyen convoyeur (2) qui est relié de telle manière à l'arbre de mélange (4) que le moyen convoyeur (2) et l'arbre de mélange (4) sont entraînables communément par un moyen d'entraînement, **caractérisé en ce qu'**un arbre de mélange creux-cylindrique (5) (arbre extérieur) est agencé en association enveloppante avec le premier arbre de mélange (4) (arbre intérieur) à l'intérieur de la chambre de mélange (3) de manière à pouvoir être entraîné en rotation, **en ce que** l'arbre extérieur (5) pénètre en porte-à-faux dans la chambre de mélange (3) et forme donc à la face frontale un passage (10) entre l'extrémité libre de l'arbre extérieur (5) et la paroi (11) de la chambre de mélange, **en ce que** l'admission de matière en fusion (6) débouche dans une chambre de mélange intérieure (8) (chambre intérieure) réalisée entre l'arbre intérieur (4) et l'arbre extérieur (5) et la sortie de matière en fusion (7) débouche dans une chambre de mélange extérieure (9) (chambre extérieure) réalisée entre l'arbre extérieur (5) et la paroi (11) de chambre de mélange ou vice-versa et **en ce que** la chambre intérieure (8) et la chambre extérieure (9) sont reliées par le passage (10).

2. Dispositif pour mélanger un polymère en fusion avec une chambre de mélange (3) qui a une admission de matière en fusion (6) et une sortie de matière en fusion (7), et avec un arbre de mélange (4) à l'intérieur de la chambre de mélange (3), **caractérisé en ce qu'**un arbre de mélange creux-cylindrique (5) (arbre extérieur) entraîné en rotation est agencé en association enveloppante avec le premier arbre de mélange (4) à l'intérieur de la chambre de mélange (3) de manière à pouvoir être entraîné en rotation, **en ce que** l'arbre extérieur (5) pénètre en porte-à-faux dans la chambre de mélange (3) et forme donc à la face frontale un passage (10) entre l'extrémité libre de l'arbre extérieur (5) et la paroi (11) de la chambre de mélange, **en ce que** l'admission de matière en fusion (6) débouche dans une chambre de mélange intérieure (8) (chambre intérieure) réalisée entre l'arbre intérieur (4) et l'arbre extérieur (5) et la sortie de matière en fusion (7) débouche dons une chambre de mélange extérieure (9) (chambre extérieure) réalisée entre l'arbre extérieur (5) et la paroi (11) de chambre de mélange ou vice-versa et **en ce que** la chambre intérieure (8) et la chambre extérieure (9) sont reliées entre-elles par le passage (10).

3. Dispositif selon la revendication 1 ou 2, **caractérisé en ce que** l'arbre intérieur (4) et l'arbre extérieur (5) sont entraînables dans le même sens de rotation ou dans le sens de rotation opposé.

4. Dispositif selon la revendication 3, **caractérisé en ce que** l'arbre intérieur (4) et l'arbre extérieur (5) sont agencés sur un arbre d'entraînement commun.

5. Dispositif selon l'une des revendications précitées, **caractérisé en ce que** l'arbre extérieur (5) présente à l'intérieur sur l'enveloppe plusieurs éléments de mélange (18) et l'arbre intérieur (4) présente sur la périphérie plusieurs éléments de mélange (17), qui pénètrent dans la chambre intérieure (8).

6. Dispositif selon la revendication 5, **caractérisé en ce que** les éléments de mélange (17) de l'arbre intérieur (4) et les éléments de mélange (18) de l'arbre extérieur (5) s'engagent les uns dans les autres, l'admission de matière en fusion (6) et la sortie de matière en fusion (7) débouchant dans la zone de l'extrémité montée de l'arbre extérieur (5) dans la chambre de mélange (3).

7. Dispositif selon la revendication 1 ou 2, **caractérisé en ce qu'**un tube (37) enveloppant l'arbre intérieur (4) est agencé dans la chambre de mélange (3), **en ce que** le tube (37) pénètre avec une extrémité libre dans l'arbre extérieur (5) et forme en l'occurrence à la face frontale un deuxième passage (40) entre l'extrémité libre et la paroi (11) de la chambre de mélange et **en ce que** le tube (37) est fixé avec l'extrémité opposée sur la paroi (11) de la chambre de mélange lquelle est opposée à l'extrémité de l'arbre extérieur (5), dans quel cas entre l'arbre intérieur (4) et le tube (37) la chambre intérieure (8) et entre l'arbre extérieur (5) et le tube (37) une chambre intermédiaire de mélange (39) (chambre intermédiaire) est formée qui via le deuxième passage (40) est reliée à la chambre intérieure (8) et via le premier passage (10) à la chambre extérieure (9).

8. Dispositif selon la revendication 7, **caractérisé en ce que** l'arbre intérieur (4) présente sur la périphérie des éléments de mélange (17) faisant saillie de manière radiale qui s'étendent sensiblement à travers la chambre intérieure (8).

9. Dispositif selon la revendication 7 ou 8, **caractérisé en ce que** la chambre de mélange (3) est élargie en forme de tourillon par l'extrémité fixée du tube (37), qui est pénétré sensiblement sur toute la longueur par l'arbre intérieur (4).

10. Dispositif selon l'une des revendications 7 à 9, **caractérisé en ce que** l'arbre extérieur (5) présente des éléments de mélange (18) pénétrant de manière radiale vers l'intérieur et s'étendant sensiblement à travers la chambre intermédiaire.

11. Dispositif selon l'une des revendications 7 à 9, **caractérisé en ce que** la chambre intermédiaire (39) est formée sensiblement par plusieurs creux (48) en forme de rainures dans la surface du tube et par plusieurs creux (47) dans la surface intérieure d'enveloppe de l'arbre extérieur (5) et **en ce que** les creux (48) du tube (37) et les creux (47) de l'arbre extérieur (5) sont agencés de telle manière les uns par rapport aux autres que lors de la rotation de l'arbre extérieur (5) un flux de matière en fusion est forcé en alternance d'un creux du tube (37) jusque dans un creux de l'arbre extérieur (5) et vice-versa.

12. Dispositif selon l'une des revendications précitées, **caractérisé en ce que** la chambre extérieure (9) est formée sensiblement par plusieurs dégagements (43) dans la paroi (11) de chambre de mélange en forme de rainures et par plusieurs dégagements (44) dans la surface extérieure d'enveloppe de l'arbre extérieur (5) et **en ce que** les dégagements (43) de la paroi (11) de chambre de mélange et les dégagements (44) de l'arbre extérieur (5) sont agencés de telle manière les uns par rapport aux autres que lors de la rotation de l'arbre extérieur (5) un flux de matière en fusion est forcé en alternance d'un dégagement de la paroi (11) de chambre de mélange jusque dans un dégagement de l'arbre extérieur (5) et vice-versa.

13. Dispositif selon l'une des revendications 1 à 11, **caractérisé en ce que** l'arbre extérieur (5) présente à la périphérie des éléments de mélange (19) faisant saillie de manière radiale, lesquels éléments de mélange (19) s'étendent sensiblement à travers la chambre extérieure.

14. Dispositif selon la revendication 1, **caractérisé en ce que** le moyen convoyeur (2) est une vis d'extrusion (13, 50) qui précède la mélangeuse (1).

15. Dispositif selon la revendication 1, **caractérisé en ce que** le moyen convoyeur (2) est une pompe de distribution qui suit la mélangeuse (1).

16. Dispositif selon la revendication 15, **caractérisé en ce que** la pompe de distribution est réalisée en tant que pompe à engrenages multiples avec plusieurs couples d'engrenage et **en ce que** les couples d'engrenage (23, 26, 27, 28) et les arbres de mélange (4, 6) sont entraînables communément par un arbre d'entraînement (24).
